# EUROPÄISCHE PATENTSCHRIFT

(11) **EP 3 704 366 B1**
(45) Veröffentlichungstag und Bekanntmachung des Hinweises auf die Patenterteilung: **03.04.2024**
(21) Anmeldenummer: 18789012.4
(22) Anmeldetag: 04.10.2018
(51) Int. Cl.: F02B 37/24, F02B 37/12, F02D 41/14, F02D 41/00

(54) **VERFAHREN ZUM STEUERN UND/ODER REGELN EINES ABGASTURBOLADERS EINES VERBRENNUNGSMOTORS**
METHOD FOR OPEN-LOOP AND/OR CLOSED-LOOP CONTROL OF AN EXHAUST -GAS TURBOCHARGER OF AN INTERNAL COMBUSTION ENGINE MOTOR VEHICLE
PROCÉDÉ DE COMMANDE ET/OU DE RÉGULATION D'UN TURBOCOMPRESSEUR DE GAZ D'ÉCHAPPEMENT D'UN MOTEUR À COMBUSTION INTERNE

(30) Priorität: 02.11.2017 DE 102017125631
(43) Veröffentlichungstag der Anmeldung: 09.09.2020
(73) Patentinhaber: Volkswagen Aktiengesellschaft, 38440 Wolfsburg (DE)
(72) Erfinder: HEINKEN, Sebastian, 38106 Braunschweig (DE)
(74) Vertreter: Kirschner, Sebastian
(86) Internationale Anmeldenummer: PCT/EP2018/076974
(87) Internationale Veröffentlichungsnummer: WO 2019/086193

(56) Entgegenhaltungen:
- WO-A1-2008/083771
- WO-A1-2008/083771
- DE-A1-102012 206 375
- FR-A1- 2 843 781
- FR-A1- 2 902 467

## Beschreibung

Die Erfindung betrifft ein Verfahren zum Steuern und/oder Regeln eines Abgasturboladers mit den Merkmalen des Oberbegriffs des Patentanspruchs 1. Der Abgasturbolader wird im Rahmen der Erfindung vor einer Überdrehzahl geschützt.

Ein Abgasturbolader weist einen Verdichter und eine Turbine auf. Während eines Ansaugtaktes wird eine möglichst große Frischgasmenge durch den Verdichter in den oder die Zylinder gefördert. Hierzu wird die Turbine von dem Abgasstrom und damit auch der mit der Turbine gekoppelte Verdichter angetrieben. Die vom Abgasturbolader vorverdichtete, aufgeheizte Luft kann durch eine Ladeluftkühlung vor Eintritt in die Zylinder abgekühlt werden. Um den Abgasturbolader vor einer Beschädigung zu schützen, ist zu vermeiden, dass die Drehzahl des Turbinenrades und des Verdichterrades eine maximale Drehzahl übersteigt.

Es wird insbesondere eine Stellgröße zur Regelung bzw. Steuerung des Abgasturboladers verwendet. Es werden Abgasturbolader mit einer Ladedruckregelung versehen, die ermöglicht, dass der Abgasturbolader bereits bei niedrigen Abgasströmen eine hohe Leistung hat und trotzdem bei hohen Drehzahlen die Belastungsgrenze nicht überschritten wird. Ein steigender Abgasmassenstrom hat eine steigende Drehzahl zur Folge. Diese Ladedruckregelung kann auf unterschiedliche Arten erfolgen. Wenn ein Abgasturbolader mit variabler Turbinengeometrie (VTG) eingesetzt wird, weist dieser verstellbare Leitschaufeln auf. Alternativ kann ein Abgasturbolader mit einem Wastegate verwendet werden. Die Regelung kann entweder über das Wastegate, insbesondere bei Otto-Motoren, oder über die verstellbaren Leitschaufeln, insbesondere bei einem Dieselmotor, erfolgen. Diese Stellung des Wastegates oder der Leitschaufeln erfolgt in Abhängigkeit der Stellgröße. Es wird dabei insbesondere ein elektrisches Stellglied verwendet, das eine kontinuierliche Stellung des Wastegates bzw. der Leitschaufeln ermöglicht. Bei einer Ladedruckregelung mittels eines Wastegates wird ein entsprechendes Bypass-Ventil im Abgasstrang eingesetzt. Dieses Wastegate bzw. Bypass-Ventil kann einen Teil des Abgasstroms an der Turbine vorbeileiten, um so eine Erhöhung des Ladedrucks zu vermeiden. Hierdurch lässt sich ein Abgasturbolader einsetzen, der bereits bei niedrigen Drehzahlen genügend Ladedruck produziert. Bei höheren Laderdrehzahlen wird ein Teil des Abgasmassenstroms an der Turbine vorbeigeleitet, um den Lader nicht zu überlasten. Die Leitschaufeln sind im Abgasstrom vor dem Turbinenrad verstellbar, wodurch die Leistungsabgabe und das Ansprechverhalten an unterschiedliche Betriebsbedingungen angepasst werden kann. Bei wenig Gasdurchsatz und zugleich hohem Leistungsbedarf wird das Abgas durch reduzierte Strömungsquerschnitte beschleunigt und auf die Turbinenschaufeln geleitet, was die Drehzahl der Turbine und somit die Leistung des Verdichters erhöht. Umgekehrt kann bei hohem Gasdurchsatz durch große Querschnitte die Strömungsgeschwindigkeit verringert werden, was die Leistung des Abgasturboladers mindert.

Der von dem Abgasturbolader bereitgestellte Ladedruck hängt nun einer Vielzahl von Faktoren ab, die bei der Steuerung und/oder Regelung des Abgasturboladers berücksichtigt werden sollten. Bei der Regelung des Abgasturboladers ist das Ziel, dass ein Ist-Ladedruck einen Soll-Ladedruck erreicht. Wenn beispielsweise im Druckrohr zwischen dem Verdichter und dem jeweiligen Zylinder eine Leckage auftritt, so wird der Soll-Ladedruck erst später erreicht, da der Ist-Ladedruck durch die Leckage reduziert ist. Bei großen Leckagen wird der Soll-Ladedruck gegebenenfalls gar nicht erreicht. Ferner hängt die Wirkungsweise des Abgasturboladers von einem Abgasgegendruck im Abgasstrang ab. Wenn der Abgasgegendruck steigt, so steht weniger Energie zum Antrieb der Turbine zur Verfügung. D.h. auch in einem solchen Fall baut sich der Ist-Ladedruck langsamer auf als im Fall eines niedrigeren Abgasgegendrucks. Der Abgasgegendruck ist in einem Verbrennungsmotor mit einem Partikelfilter, beispielsweise einem Otto-Partikelfilter, nicht konstant. Beispielsweise kann durch Einlagerung von Ruß, Asche und/oder Wasser ein temporärer Gegendruckanstieg in der Abgasanlage erfolgen.

Aus der DE 10 2012 206 352 A1 ist ein Verfahren zur Steuerung einer Brennkraftmaschine mit einem Motor, mit einer Abgasturboladeraufladegruppe und mit einem Getriebe bekannt. Die Abgasturboaufladergruppe weist einen Basisabgasturbolader und einen Schaltabgasturbolader auf. Der Basisabgasturbolader und der Schaltabgasturbolader können als Abgasturbolader mit einer variablen Turbinengeometrie ausgestaltet sein. Der Betrieb des Motors wird gesteuert unter Verwendung einer dynamischen Drehzahl-Begrenzungsregelung (DBR). Es wird eine primäre DBR-Kennlinie mit einem primären Abregelbogen und eine DBR-Kennlinie mit einem sekundären Abregelbogen zum gesteuerten Betrieb des Motors vorgehalten. Die Werte im sekundären Abregelbogen liegen unterhalb der Werte im primären Abregelbogen. Der Motor wird entweder gemäß der primären DBR-Kennlinie oder, bei einem signalisierten vorbestimmten Betriebsmodus des Getriebes, gemäß der sekundären DBR-Kennlinie betrieben. Es wird beim Betreiben des Motors ein Grenzwert der ersten primären Kennlinie, insbesondere einer Grenzwertdrehzahl des Abgasturboladers und/oder einer Grenzwertdrehzahl des Motors erkannt.

Aus der WO 2008/083771 A1 ist ein Regelverfahren für einen Abgasturbolader mit einer verstellbaren Turbinengeometrie (VTG) bekannt. In einer ersten Phase werden die Leitschaufeln in Abhängigkeit vom jeweiligen Betriebspunkt auf die von diesem Betriebspunkt maximal mögliche Schließposition verfahren. In der zweiten Phase werden die Leitschaufeln auf eine optimale Position vorgesteuert, die überwiegend aus der Drehzahl und dem Drehmoment des Motors generiert wird. In der dritten Phase wird der Ladedruck geregelt. Die zweite Phase wird so lange aktiviert bis der Ladedruck seinen voreingestellten Wert erreicht hat. In der dritten Phase wird ein stetiger und stabiler Betriebszustand angestrebt, wobei eine Standardladedruckregelung mit geschlossenem Regelkreis sowie eine Stellungsregelung mit geschlossenem Regelkreis durchgeführt werden kann.

Aus der FR 2 843 781 A1 ist ein Verfahren zum Anpassen von Steuerparametern eines Ladedruckreglers in einem Verbrennungsmotor mit mindestens einem Abgasturbolader bekannt. Es wird der Betriebszustand des Verbrennungsmotors erfasst und bei einem stationären Betriebszustand und bei Vorhandensein bestimmter Betriebsgrößen des Verbrennungsmotors wird festgestellt, ob eine Anpassung der Regelungsparameter erfolgen muss. Es wird dabei das Übersetzungsverhältnis und damit der aktuell eingelegte Gang berücksichtigt.

Aus der FR 2 902 467 A1 ist ein- Ladedruckregelsystem eines aufgeladenen Verbrennungsmotors bekanntr. Das Ladedrucksystem ist mit einem Partikelfilter in seiner Abgasleitung und einem Turbolader mit variabler Leistung ausgestattet. Der Turbolader kann gesteuert werden. Es ist ein Ladedrucksensor und ein Regler vorhanden, der einen gemessenen Druckwert vom Sensor und einen eingestellten Wert empfängt. Der Regler ist in der Lage, die Leistung des Turboladers und einer Speichermediumeinrichtung zu steuern. Es sind ferner Mittel zum Speichern der Beladung eines Partikelfilters vorhanden, die in der Lage sind, zuvor gelernte Korrekturwerte zu speichern und die Variation in der Beladung der Partikel des Filters zu berücksichtigen. Es wird eine Partikelfilterverstopfung in dem Verfahren erkannt und berücksichtigt.

Der Erfindung liegt die Aufgabe zugrunde, dass gattungsbildende Verfahren derart auszugestalten und weiterzubilden, so dass die Gefahr des Überschreitens einer maximalen Drehzahl des Abgasturboladers vermindert ist.

Diese der Erfindung zugrunde liegende Aufgabe wird nun durch ein Verfahren mit den Merkmalen des Patentanspruches 1 gelöst.

Eine dem Abgasturbolader zugeordnete Stellgröße wird mit einer Stellgrößengrenzkennlinie verglichen. Falls die Stellgröße die Stellgrößengrenzkennlinie droht zu überschreiten, wird die Stellgröße auf den Wert der Stellgrößengrenzkennlinie begrenzt. Die Stellgrößenkennlinie ist eine zeitabhängige Funktion, wobei die Stellgrößengrenzkennlinie nach einer Änderung des Soll-Ladedrucks einen zeitlich begrenzten, ersten (dynamischen) Anteil und einen zeitlich anschließenden, zweiten (stationären) Anteil aufweist, wobei der erste Anteil nach einer vorbestimmten Zielzeit endet, wobei der zweite Anteil der Stellgrößengrenzkennlinie gegenüber dem ersten Anteil derart reduziert ist, so dass die maximale Drehzahl nicht erreicht wird. Der erste Anteil kann auch als dynamischer Anteil bezeichnet werden, da bis zum Ende der Zielzeit bei einem fehlerfreien Betrieb des Verbrennungsmotors und des Abgasturboladers der Ist-Ladedruck den Soll-Ladedruck erreicht haben sollte. Der zweite Anteil kann auch als stationärer Anteil bezeichnet werden, da nach der Zielzeit der Ist-Ladedruck dem Soll-Ladedruck bei einem fehlerfreien Betrieb des Verbrennungsmotors und des Abgasturboladers entsprechen sollte.

Dies hat den Vorteil, dass eine Überdrehzahl des Abgasturboladers auch bei Vorhandensein einer Leckage oder eines Gegendruckanstiegs in der Abgasanlage sicher vermieden ist. Bei einem fehlerfreien Betrieb des Verbrennungsmotors und des Abgasturboladers treten keine Performanceeinbußen durch die Stellgrößengrenzkennlinie auf, da in diesem Fall die Stellgröße nicht droht, die Stellgrößengrenzkennlinie zu überschreiten.

Die Zielzeit wird vorab dadurch bestimmt, dass innerhalb der Zielzeit der Ist-Ladedruck bei einem fehlerfreien Betrieb des Verbrennungsmotors und des Abgasturboladers voraussichtlich den Soll-Ladedruck erreicht haben sollte. Die vorbestimmte Zielzeit wird in Abhängigkeit von dem aktuell eingelegten Gang, dem atmosphärischen Druck und der Drehzahl vorab bestimmt. Die Zielzeit gibt den hypothetischen Zeitpunkt an, wann der Zielbetriebspunkt, d.h. der Ist-Ladedruck den Soll-Ladedruck erreicht haben sollte. Diese Zielzeit und damit die zeitliche Länge des dynamischen Anteils kann durch Vergleichsmessung oder durch Simulationen vorab gewonnen werden. Diese Zielzeiten und damit die Länge des ersten, dynamischen Anteils sind unabhängig von der tatsächlichen Differenz zwischen dem Soll-Ladedruck und dem tatsächlichen Ist-Ladedruck. Dies hat den Vorteil, dass beim Auftreten einer Leckage oder eines Anstiegs des Abgasgegendrucks eine Rückkopplung bei der Regelung auftritt. Es wird insbesondere eine Closed-Loop-Regelung verwendet. Dadurch dass die Zielzeit bereits vorher bestimmt ist, ist die Gefahr vermieden, dass der Abgasturbolader zu lange voll ausgesteuert wird aufgrund eines verzögernden Aufbaus des Ist-Ladedruckes. Wenn nun tatsächlich eine Leckage auftreten sollte oder der Abgasgegendruck in der Abgasanlage beispielsweise durch Ablagerungen in einem Partikelfilter steigt, so wird durch die erfindungsgemäße Stellgrößengrenzkennlinie die Stellgliedposition automatisch bereits dann zurückgefahren, wenn zwar theoretisch der Ist-Ladedruck bereits des Soll-Ladedruck erreicht haben sollte, aufgrund der Leckage oder des erhöhten Abgasgegendrucks aber der Ist-Ladedruck den Soll-Ladedruck noch nicht erreicht hat. Dies hat zwar den Nachteil, dass bei einer Beladung des Partikelfilters die Stellgliedposition bereits früh durch den stationären Anteil begrenzt wird, obwohl der tatsächliche Ist-Ladedruck den Soll-Ladedruck noch nicht erreicht hat und somit die Fahrleistungen minimal reduziert sind, um eine Überdrehzahl des Abgasturboladers zu vermeiden. Das erfindungsgemäße Verfahren hat jedoch den Vorteil, dass das Verfahren einfach umzusetzen ist, da das Bedaten der Stellgrößengrenzkennlinie einschließlich des Bestimmens der theoretischen Zielzeiten zum Erreichen der Soll-Ladedrücke auf einfache Weise durch Vergleichsmessungen oder Simulationen vorgenommen werden kann.

Die Zielzeit wird vorab festgelegt in Abhängigkeit von mehreren Größen, nämlich in welchem Gang befindet sich das Fahrzeug, welcher atmosphärischer Druck herrscht und wie ist die Drehzahl des Motors. Der atmosphärische Druck kann dabei in Abhängigkeit von der Höhe des Fahrzeugs bestimmt werden. Wenn keine Leckage und kein erhöhter Abgasgegendruck auftreten, so wird durch das Verfahren der Betrieb des Abgasturboladers nicht beschränkt. Ferner hängt die Zielzeit von der Größe der Soll-Ladedruckänderung ab. Bei einer größeren Solladedruckänderung dauert es entsprechend länger, bis der Ist-Ladedruck den Soll-Ladedruck erreicht hat.

Der erste Anteil der Stellgrößengrenzkennlinie ist eine konstante Funktion. Die Stellgröße kann hier in der Art gewählt werden, dass Sie insbesondere den dynamischen Anteil der Stellgrößengrenzkennlinie entspricht. Hierbei wird eine maximal mögliche Turboladestellgliedposition eingenommen. D.h. der stationäre Anteil entspricht einer maximalen Stellgliedposition.

Durch den ersten, dynamischen Anteil wird eine Vollaussteuerung der Stellgröße beschrieben, wobei der dynamische Anteil eine bis zum Ende der Zielzeit konstante Funktion ist. Hierdurch wird der Soll-Ladedruck möglichst schnell aufgebaut. Dass Stellglied wird in dieser ersten Zeit bis zum Erreichen der Zielzeit in der Maximalstellung gehalten.

Der zweite, stationäre Anteil der Stellgrößengrenzkennlinie ist vorzugsweise eine insbesondere monoton fallende Funktion. Dies hat den Vorteil, dass durch eine steigende Motordrehzahl ein zunehmender Massenstrom durch eine stärker zunehmende Begrenzung der Stellgröße berücksichtigt wird, um den Abgasturbolader vor dem Erreichen der maximalen Drehzahl zu schützen.

Die Stellgröße beschreibt vorzugsweise die Stellung eines Wastegates, wobei bei einer Vollaussteuerung der Stellgröße das Wastegate geschlossen ist, so dass der maximal mögliche Abgasstrom am Turbinenrad zur Verfügung steht.

Alternativ kann durch die Stellgröße eine Leitschaufelstellung eines Abgasturboladers mit einer variablen Turbinengeometrie beschrieben werden. Im Fall eines Abgasturboladers mit einer variablen Turbinengeometrie entspricht die Vollausteuerung einer geschlossenen Stellung der Leitschaufeln, so dass die Turbinenleistung durch das Aufstauen des Drucks vor der Turbine maximiert wird.

Im Abgasstrang wird ein Partikelfilter, insbesondere ein Ottopartikelfilter oder ein Dieselpartikelfilter, verwendet. Das Verfahren eignet sich insbesondere zum Einsatz bei Verbrennungsmotoren, die mit einem Partikelfilter ausgestattet sind, da hier ein Gegendruckanstieg im Abgasstrang auftreten kann.

Das Verfahren ist in einer Software in einem Steuergerät implementiert, wobei durch die Software das beschrieben Verfahren anwendbar bzw. ausführbar ist.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden darf eine bevorzugte Ausgestaltung der Erfindung anhand der Zeichnung und der dazugehörigen Beschreibung näher erläutert werden. In der Zeichnung zeigt:
- Fig. 1: einen Soll-Ladedruck, einen Ist-Ladedruck einer Stellgröße des Abgasturboladers sowie eine Stellgrößengrenzkennlinie mit einem ersten, dynamischen und einem zweiten, stationären Anteil, wobei keine Leckage und kein erhöhter Abgasgegendruck auftritt,
- Fig. 2: in einem Diagramm einen Soll-Ladedruck, einen verzögert aufgebauten Ist-Ladedruck, eine theoretisch nötige Regelgröße zur Erreichung des Soll-Ladedrucks so wiederum die Stellgrößengrenzkennlinie, wobei eine Leckage auftritt und/oder ein erhöhter Abgasgegendruck auftreten.

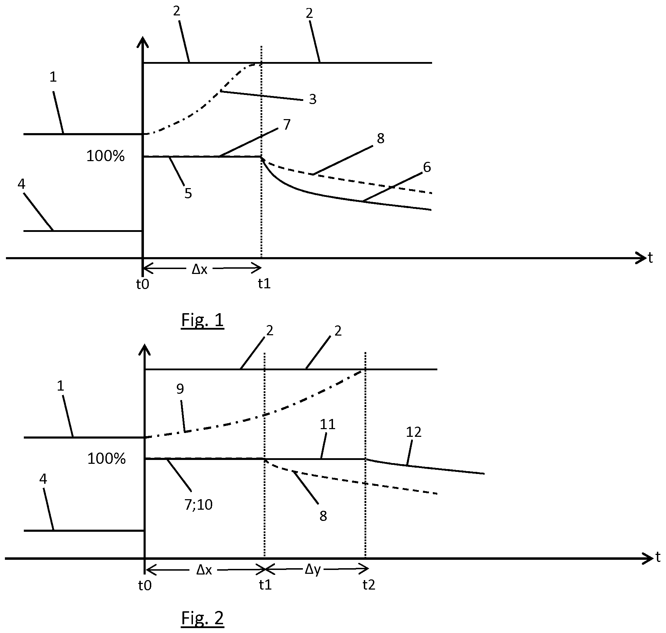

Fig. 1 und 2 zeigen einen Soll-Ladedruck 1, 2, wobei der Soll-Ladedruck bis zum einem Zeitpunkt t0 zunächst auf einem niedrigen Niveau und ab dem Zeitpunkt t0 auf einem höheren Niveau, nämlich dem Soll-Ladedruck 2 liegt. Eine solche Änderung des Soll-Ladedrucks 1, 2 zum Zeitpunkt t0 kann beispielsweise auftreten, wenn der Fahrer beschleunigt.

Bei der Regelung des Abgasturboladers wird ein Ist-Ladedruck 3 mit dem Soll-Ladedruck 1, 2 verglichen. Insbesondere wird ein Closed-Loop-Regler zur Ladedruckregelung verwendet. Zum Zeitpunkt t0 entspricht der Ist-Ladedruck 3 dem Soll-Ladedruck 1. Bis zum späteren Zeitpunkt t1 steigt der Ist-Ladedruck 3 bis auf den Wert des Soll-Ladedrucks 2 an. Die Zeitspanne zwischen dem Zeitpunkt t0 und dem Zeitpunkt t1 wird mit Δx bezeichnet. Um nun den Ist-Ladedruck 3 ausgehend vom Zeitpunkt t0 zu erhöhen, wird eine Stellgröße 4, 5, 6 des Abgasturboladers verändert. Bis zum Zeitpunkt t0 liegt die Stellgröße 4 unterhalb von 100%. Zwischen dem Zeitpunkt t0 und t1 beträgt die Stellgröße 5 100% und ab dem Zeitpunkt t1 wird die Stellgröße 6 kontinuierlich reduziert ausgehend von der vorigen 100% Vollausteuerung des Abgasturboladers. Die Stellgröße 4, 5, 6 beschreibt beispielsweise die Leitschaufelstellung eines VTG-Abgasturboladers oder die Stellung eines Wastegateventils. Während der Vollaussteuerung zwischen den Zeitpunkten t0 und t1 ist das Wastegateventil vollständig geschlossen und wird ab dem Zeitpunkt t1 nach und nach wieder geöffnet und ist vor dem Zeitpunkt t0 noch weiter geöffnet. Im Fall eines VTG-Abgasturboladers ist in der Zeitspanne Δx die Leitschaufelstellung geschlossen, damit die Turbine des Abgasturboladers maximal beschleunigt wird. Die Leitschaufelstellung wird ab dem Zeitpunkt t1 zunehmend geöffnet.

Der Abgasturbolader wird vor einem Überschreiten einer maximalen Drehzahl geschützt. Hierzu wird die dem Abgasturbolader zugeordnete Stellgröße 4, 5, 6 mit einer Stellgrößengrenzkennlinie 7, 8 verglichen und die Stellgröße 4, 5, 6 wird bei der Regelung nötigenfalls auf den Wert der Stellgrößengrenzkennlinie 7, 8 begrenzt. Die Stellgröße 4, 5, 6 kann hierbei maximal den Wert der Stellgrößengrenzkennlinie 7, 8 einnehmen.

Die Stellgrößengrenzkennlinie 7, 8 weist nach einer Änderung des Soll-Ladedrucks 1, 2 zum Zeitpunkt t0 einen zeitlich begrenzten ersten, dynamischen Anteil 7 und einen zeitlich anschließenden zweiten, stationären Anteil 8 auf. Der erste, dynamische Anteil 7 endet nach einer vorbestimmten Zielzeit Δx zum Zeitpunkt t1. Die Zielzeit Δx gibt die Zeitdauer an, innerhalb derer der Ist-Ladedruck 3 voraussichtlich den Soll-Ladedruck 2 erreicht hat. Diese Zeitdauer bzw. Zielzeit Δx wird im Vorhinein durch Messungen oder durch eine Simulation bzw. eine Berechnung bestimmt.

In der Fig. 1 ist ein Betriebszustand des Verbrennungsmotors und des Kraftfahrzeugs dargestellt, in dem keine Leckage und kein erhöhter Gegendruck auftreten und der tatsächliche Ist-Ladedruck 3 erreicht nun auch innerhalb der Zielzeit Δx, d.h. bis zum Zeitpunkt t1 den Soll-Ladedruck 2. Innerhalb des Zeitfensters Δx ist der erste, dynamische Anteil 7 vorzugsweise konstant. Der dynamische Anteil 7 entspricht hierbei einer Vollaussteuerung der Stellgröße 5, was in der Zeichnung durch die Angabe "100%" verdeutlicht wird.

Nach der Zeit t1 wird die Vollaussteuerung der Stellgröße 7 von der Stellgröße 6 zurückgenommen, da die Drehzahl des Verbrennungsmotors gleichzeitig steigt und durch den nunmehr erhöhten Massenstrom durch den Abgasturbolader die Stellung des Wastegates teilweise geöffnet bzw. die Stellung der Leitschaufel teilweise geöffnet werden kann. In der Zeit Δx fallen die Stellgröße 5 und der dynamische Anteil 7 zusammen. Anschließend, d.h. nach der Zeit t1, liegt die Stellgröße 6 unterhalb des stationären Anteils 8 der Stellgrößengrenzwertkennlinie 7, 8. Der Verlauf des stationären Anteils 8 ist derart gewählt, dass der Abgasturbolader auch bei einem steigenden Massenstrom nicht die maximale Drehzahl erreichen kann. Das Verfahren hat den Vorteil, dass ohne des Vorliegens einer Leckage und/oder des Vorliegens eines erhöhten Abgasgegendrucks - beispielswiese durch einen beladenen Ottopartikelfilter - die Stellgröße 6, 7 nicht beschränkt wird, wodurch keine Fahrleistungseinbußen auftreten.

In Fig. 2 ist nun ein Fall dargestellt, in dem eine Leckage und/oder ein erhöhter Abgasgegendruck beispielsweise durch einen beladenen Partikelfilter auftreten.

Auch hier ist zu einem Zeitpunkt t0 die gleiche Änderung des Soll-Ladedrucks 1, 2 dargestellt. Durch die Leckage baut sich der Ist-Ladedruck 9 nun verzögert auf. Zum Zeitpunkt t1 hat der Ist-Ladedruck 9 noch nicht den Soll-Ladedruck 2 erreicht. Um nun den Abgasturbolader vor einer Überdrehzahl zu schützen, wird nun eine Vollaussteuerung des Abgasturboladers zum Zeitpunkt t1 abgebrochen, da ab dem Zeitpunkt t1 der stationäre Anteil 7 der Stellgrößengrenzkennlinie 7, 8 greift. D.h. ab dem Zeitpunkt t1 verläuft hier die Stellgröße 10 entlang der Stellgrößengrenzkennlinie 8, nämlich dem stationären Anteil 8.

Dargestellt ist in Fig. 2 ferner die Ausgestaltung, wenn kein Überdrehzahlschutz vorhanden wäre, dann würde die Stellgröße vom Zeitpunkt t1 bis zum Zeitpunkt t2 weiter in der Vollaussteuerung gehalten werden (vgl. Bezugszeichen 11) und erst zum Zeitpunkt t2, wenn der Ist-Ladedruck 9 tatsächlich den Soll-Ladedruck 2 erreicht hat, wird die Vollaussteuerung der Stellgröße 11 in Form des Abfalls 12 zurückgenommen. Dieser Fall wird jedoch durch den Überdrehzahlschutz verhindert, da nach der vorab abgespeicherten Zeit t1 bereits die Stellgröße durch den stationären Anteil 11 begrenzt wird.

Das Verfahren hat den Vorteil, dass die Stellgrößengrenzkennlinie 7, 8 einfach zu bedaten ist und gleichsam maximal wirksam ist. Dadurch lassen sich effektiv und sicher Turboladerschäden durch eine Überdrehzahl vermeiden. Mittels des Verfahrens wird die Stellgrößengrenzkennlinie im stationären Anteil 8 als auch in dynamischen Anteil 7 derart bestimmt, dass eine maximal mögliche Turboladerstellgliedposition berechnet wird. Diese Stellgrößengrenzkennlinie ist unabhängig von der tatsächlichen Änderung des Ist-Ladedrucks 3, 9. Dadurch, dass die Stellgrößengrenzkennlinie unabhängig von der tatsächlichen Ist-Ladedrucks ist, werden Rückkopplungen beim Auftreten eines Fehlers, beispielsweise durch einen zu hohen Abgasgegendruck oder durch eine Leckage, vermieden. Mit dem erfindungsgemäßen Verfahren kann bei einem Feinleck oder bei hoher Partikelfilterbeladung das Turboladerstellglied in seiner Position begrenzt werden, damit keine Überdrehzahl entsteht. Mit dem Verfahren wird der Vorteil erzielt, dass der fehlerfreie Betrieb des Verbrennungsmotors von der Begrenzung nicht tangiert wird (vgl. Fig. 1).

Wenn nun nach dem Zeitpunkt t1 oder t2 wieder eine Dynamikänderung im Fahrverhalten erwartet wird, so beginnt das Verfahren von vorne und es greift wieder die zeitliche begrenzte Stellgliedbegrenzung für den Transientenbetrieb. Durch das Verfahren wird vermieden, dass bei der Druckregelung des Motors und des Abgasturboladers mit einem Closed-Loop-Regler die Störgrößen durch mehr Turbinenleistung kompensiert werden, was zu einer Beschädigung des Laders führen könnte.

### BEZUGSZEICHENLISTE

- 1: Soll-Ladedruck
- 2: Soll-Ladedruck
- 3: Ist-Ladedruck (fehlerfreier Betrieb)
- 4: Stellgröße vor dem Zeitpunkt t0
- 5: Stellgröße nach dem Zeitpunkt t0
- 6: Stellgröße nach dem Zeitpunkt t1
- 7: erster, dynamischer Anteil einer Stellgrößengrenzkennlinie
- 8: zweiter, stationärer Anteil einer Stellgrößengrenzkennlinie
- 9: Ist-Ladedruck bei fehlerbehafteten Betrieb beispielweise durch Auftreten einer Leckage oder eines erhöhten Abgasgegendrucks
- 10: Stellgröße in der Zeit Δx
- 11: Stellgröße nach dem Zeitpunkt t1 ohne Überdrehzahlschutz
- 12: Stellgröße nach dem Zeitpunkt t2 ohne Überdrehzahlschutz

## Patentansprüche

1. Verfahren zum Steuern und/oder Regelns eines Abgasturboladers eines Verbrennungsmotors, wobei der Abgasturbolader vor einem Überschreiten einer maximalen Drehzahl geschützt wird, wobei ein Ist-Ladedruck mit einem Soll-Ladedruck verglichen wird, wobei eine dem Abgasturbolader zugeordnete Stellgröße (4, 5, 6, 10) mit einer Stellgrößengrenzkennlinie (7, 8) verglichen und ggf. begrenzt wird, wobei die Stellgrößengrenzkennlinie (7, 8) nach einer Änderung des Soll-Ladedrucks einen zeitlich begrenzten, ersten Anteil (7) und einen zeitlich anschließenden, zweiten Anteil (8) aufweist, wobei der erste Anteil (7) nach einer vorbestimmten Zielzeit (Δx) endet, wobei der zweite Anteil (8) der Stellgrößengrenzkennlinie gegenüber dem ersten Anteil (7) reduziert ist, wobei der erste Anteil (7) eine bis zum Ende der Zielzeit (Δx) konstante Funktion ist, wobei durch den ersten Anteil (7) eine Vollaussteuerung der Stellgröße (4, 5, 6) beschrieben wird, **dadurch gekennzeichnet, dass** die Zielzeit (Δx) vorab dadurch bestimmt wird, dass innerhalb der Zielzeit (Δx) der Ist-Ladedruck (3) bei einem fehlerfreien Betrieb voraussichtlich den Soll-Ladedruck (2) erreicht haben sollte, wobei die vorbestimmte Zielzeit (Δx) in Abhängigkeit von der Größe einer Soll-Ladedruckänderung, von dem aktuell eingelegten Gang, dem atmosphärischen Druck und der Drehzahl des Verbrennungsmotors vorab bestimmt wird.

2. Verfahren nach Anspruch 1, **dadurch gekennzeichnet, dass** der zweite Anteil (8) der Stellgrößengrenzkennlinie eine insbesondere monoton fallende Funktion ist.

3. Verfahren nach einem der vorstehenden Ansprüche, **dadurch gekennzeichnet, dass** durch die Stellgröße (4, 5, 6) die Stellung eines Wastegates beschrieben wird, wobei bei einer Vollaussteuerung der Stellgröße (4, 5, 6) das Wastegate geschlossen ist.

4. Verfahren nach einem der vorstehenden Ansprüche, **dadurch gekennzeichnet, dass** durch die Stellgröße (4, 5, 6) eine Leitschaufelstellung eines Abgasturboladers mit einer variablen Turbinengeometrie beschrieben wird.

5. Verfahren nach einem der vorstehenden Ansprüche, **dadurch gekennzeichnet, dass** im Abgasstrang ein Partikelfilter verwendet wird.

6. Verfahren nach dem vorstehenden Anspruch, **dadurch gekennzeichnet, dass** im Abgasstrang ein Ottopartikelfilter verwendet wird.

7. Steuergerät mit einer Software zur Anwendung des Verfahrens nach einem der vorstehendenden Ansprüche.

## Claims

1. Method for open-loop and/or closed-loop control of an exhaust-gas turbocharger of an internal combustion engine, wherein the exhaust-gas turbocharger is protected against exceeding a maximum rotation speed, wherein an actual charging pressure is compared with a setpoint charging pressure, wherein an actuating variable (4, 5, 6, 10) associated with the exhaust-gas turbocharger is compared with an actuating variable limiting characteristic curve (7, 8) and if necessary limited, wherein the actuating variable limiting characteristic curve (7, 8) has a time-limited first portion (7) following a change in the setpoint charging pressure and a chronologically following second portion (8), wherein the first portion (7) ends after a predetermined target time (Δx), wherein the second portion (8) of the actuating variable limiting characteristic curve is reduced in relation to the first portion (7), wherein the first portion (7) is a function that is constant until the end of the target time (Δx), wherein full modulation of the actuating variable (4, 5, 6) is described by the first portion (7), **characterized in that** the target time (Δx) is determined in advance, **in that** the actual charging pressure (3) is expected to have reached the setpoint charging pressure (2) within the target time (Δx) in the event of fault-free operation, wherein the predetermined target time (Δx) is determined in advance depending on the magnitude of the change in setpoint charging pressure, on the currently selected gear, the atmospheric pressure and the rotation speed of the internal combustion engine.

2. Method according to Claim 1, **characterized in that** the second portion (8) of the actuating variable limiting characteristic curve is an in particular monotonically falling function.

3. Method according to either of the preceding claims, **characterized in that** the position of a wastegate is described by the actuating variable (4, 5, 6), wherein the wastegate is closed at full modulation of the actuating variable (4, 5, 6).

4. Method according to any of the preceding claims, **characterized in that** a guide vane position of an exhaust-gas turbocharger with a variable turbine geometry is described by the actuating variable (4, 5, 6).

5. Method according to any of the preceding claims, **characterized in that** a particle filter is used in the exhaust tract.

6. Method according to the preceding claim, **characterized in that** an Otto particle filter is used in the exhaust tract.

7. Controller with software for applying the method according to any of the preceding claims.

## Revendications

1. Procédé permettant de commander et/ou de réguler un turbocompresseur de gaz d'échappement d'un moteur thermique, dans lequel le turbocompresseur de gaz d'échappement est protégé contre un dépassement d'une vitesse de rotation maximale, dans lequel une pression d'admission réelle est comparée avec une pression d'admission de consigne, dans lequel une grandeur de réglage (4, 5, 6, 10) associée au turbocompresseur de gaz d'échappement est comparée avec une courbe caractéristique de limite de grandeur de réglage (7, 8), et éventuellement limitée, dans lequel la courbe caractéristique de limite de grandeur de réglage (7, 8) présente après une variation de la pression d'admission de consigne une première part (7) limitée dans le temps et une deuxième part (8) consécutive dans le temps, dans lequel la première part (7) se termine après un temps cible (Δx) prédéterminé, dans lequel la deuxième part (8) de la courbe caractéristique de limite de grandeur de réglage est réduite par rapport à la première part (7), dans lequel la première part (7) est une fonction constante jusqu'à la fin du temps cible (Δx), dans la première part (7) décrit un régime maximal de la grandeur de réglage (4, 5, 6),
**caractérisé en ce que** le temps cible (Δx) est déterminé au préalable **en ce que** dans le temps cible (Δx), la pression d'admission réelle (3) devrait probablement avoir atteint la pression d'admission de consigne (2) en cas de fonctionnement sans défaut, dans lequel le temps cible (Δx) prédéterminé est déterminé au préalable en fonction de la grandeur d'une variation de pression d'admission de consigne, de la vitesse actuellement enclenchée, de la pression atmosphérique et de la vitesse de rotation du moteur thermique.

2. Procédé selon la revendication 1, **caractérisé en ce que** la deuxième part (8) de la courbe caractéristique de limite de grandeur de réglage est une fonction décroissante, en particulier de manière monotone.

3. Procédé selon l'une quelconque des revendications précédentes, **caractérisé en ce que** la grandeur de réglage (4, 5, 6) décrit la position d'une soupape de décharge, la soupape de décharge étant fermée en cas de régime maximal de la grandeur de réglage (4, 5, 6).

4. Procédé selon l'une quelconque des revendications précédentes, **caractérisé en ce que** la grandeur de réglage (4, 5, 6) décrit une position d'aube directrice d'un turbocompresseur de gaz d'échappement ayant une géométrie de turbine variable.

5. Procédé selon l'une quelconque des revendications précédentes, **caractérisé en ce qu'**un filtre à particules est utilisé dans le système de gaz d'échappement.

6. Procédé selon la revendication précédente, **caractérisé en ce qu'**un filtre à particules Otto est utilisé dans le système de gaz d'échappement.

7. Appareil de commande, comprenant un logiciel pour l'application du procédé selon l'une quelconque des revendications précédentes.
